# FASCICULE DE BREVET EUROPEEN

(11) **EP 3 837 736 B1**
(45) Date de publication et mention de la délivrance du brevet: **18.05.2022**
(21) Numéro de dépôt: 19753155.1
(22) Date de dépôt: 09.07.2019
(51) Int. Cl.: H01M 10/613, H01M 10/625, H01M 10/647, H01M 10/6556, H01M 10/6557, H01M 10/6568, H01M 10/04, H01M 10/052, H01M 10/12, H01M 10/30, H01M 10/34, H01M 10/54

(54) **BLOC BATTERIES AVEC REFROIDISSEUR**
BATTERIEPACK MIT KÜHLER
BATTERY PACK WITH COOLER

(30) Priorité: 13.08.2018 FR 1857474
(43) Date de publication de la demande: 23.06.2021
(73) Titulaire: PSA Automobiles SA, 78300 Poissy (FR)
(72) Inventeur: KRSTIC, Dragan, 90400 Danjoutin (FR); CAPUANO, Cyrille, 75018 Paris 18 (FR)
(86) Numéro de dépôt international: PCT/FR2019/051715
(87) Numéro de publication internationale: WO 2020/035641

(56) Documents cités:
- DE-A1-102013 200 448
- FR-A1- 3 033 876
- US-A1- 2016 204 486

## Description

La présente invention concerne un système de refroidisseur pour une batterie d'un véhicule automobile.

Les véhicules, lorsqu'ils sont à propulsion électrique ou hybride, comportent une ou des batteries de traction (ou propulsion) reliées à un réseau de puissance pour alimenter les moteurs électriques de traction (ou de propulsion).

On comprendra par batterie, dans tout le texte de ce document, un ensemble comprenant au moins un module de batterie contenant au moins une cellule électrochimique. Cette batterie comprend éventuellement des moyens électriques ou électroniques pour la gestion d'énergie électrique de ce au moins un module. Lorsqu'il y a plusieurs modules, ils sont regroupés dans un carter hermétique et forment alors un bloc batterie, ce bloc batterie étant souvent désigné par l'expression anglaise « pack batteries », ce carter contenant généralement une interface de montage, et des bornes de raccordement.

Par ailleurs, on comprendra par cellule électrochimique dans tout le texte de ce document, des cellules générant du courant par réaction chimique, par exemple de type lithium-ion (ou Li-ion), de type Ni-Mh, ou Ni-Cd ou encore plomb.

La capacité et la puissance de ces batteries sont en constante augmentation, notamment grâce à la technologie lithium-ion « Li-ion ». Cependant, ce type de batteries pose des problèmes liés à la température de fonctionnement.

En effet, les batteries au lithium-ion ont des performances limitées avec des températures négatives, et les températures élevées les dégradent rapidement, ces températures élevées étant d'autant plus élevées que la capacité et la puissance de la batterie ou du bloc batterie est grande.

Une solution consiste à réguler la température de ces batteries ou modules, et en particulier à les refroidir par conduction thermique avec des refroidisseurs.

On comprendra par refroidisseur, dans tout le texte de ce document, un échangeur de chaleur mis en contact avec la batterie ou le module de batterie, pour un échange thermique par conduction avec la batterie ou le module, cet échangeur comprenant un circuit de fluide caloporteur refroidissant ou réchauffant la batterie ou le module de batterie. Cet échangeur est, par exemple, un échangeur à plaques, dont la forme est adaptée à une batterie ou module de batterie prismatique. Mais il peut être envisagé d'autres type d'échangeurs, pour s'adapter à la forme de la batterie ou du module de batterie.

Ces refroidisseurs doivent alors être en contact avec la batterie ou le module de batterie, et correctement positionnés par rapport à ceux-ci pour une bonne efficacité de l'échange thermique. Ainsi ces refroidisseurs comprennent :
- au moins un moyen de mise en contact avec la batterie, sous forme de patins élastiques intercalés entre le carter et les refroidisseurs, forçant les refroidisseurs à s'appuyer contre les batteries ou modules de batterie,
- un système de centrage des refroidisseurs par rapport au carter des blocs batteries, par exemple des vis, des goujons, des pions de centrage, des protubérances du carter ou du refroidisseur venant respectivement en complémentarité de forme avec le refroidisseur ou le carter, ce système de centrage laissant au moins un degré de liberté de mouvement selon un sens d'appui des patins élastiques.

Pour illustrer ce système de centrage, on connait par exemple le document de brevet US-A1-20160204486 qui divulgue par sa figure 9E une série de tous 81 de montage et/ou centrage de tels refroidisseurs, ou encore des protubérances 85.

Ces refroidisseurs donnent satisfaction, mais ce système de centrage est encombrant et augmente significativement le volume du carter des blocs batteries, ce qui est un problème pour un espace de logement de batterie limité comme dans le domaine des véhicules automobiles.

Le but de l'invention est de remédier à cet inconvénient, notamment en réduisant l'encombrement de tels systèmes de centrage.

A cet effet, l'invention a pour objet un bloc batteries comprenant un carter, ce carter comprenant un refroidisseur de batterie, ce refroidisseur comprenant une canalisation de fluide caloporteur ayant au moins un raccord de fluide reliant la canalisation à un circuit de fluide extérieur au bloc batteries, ce raccord étant coiffé par un capuchon anti-intrusion amovible tel que, outre sa fonction anti-intrusion, ce capuchon a une fonction de positionnement du refroidisseur par rapport au carter.

Ainsi ce capuchon préexistant fait office de système de centrage du refroidisseur dans le carter, lorsque ce refroidisseur est monté dans le carter. La forme du capuchon et/ou leur nombre, déterminera les degrés de libertés supprimés, mais dans tous les cas ce capuchon permet de diminuer, voire de supprimer le nombre de pions de centrage ou vis ou goujons ou protubérances de centrage décrits précédemment, permettant ainsi un gain substantiel sur l'encombrement du bloc batteries.

On comprendra par capuchon anti-intrusion amovible, dans tout le texte de ce document, un capuchon obstruant par coiffage le raccord de fluide, protégeant ainsi la canalisation de l'intrusion de toutes impuretés (graisse, copeaux, poussières...) avant que cette canalisation soit raccordée au circuit de fluide extérieur. Ce capuchon sera alors retiré lors du montage, au moment ou un peu avant ce raccordement.

On comprendra par un circuit de fluide extérieur au bloc batteries, dans tout le texte de ce document, un circuit reliant fluidiquement plusieurs refroidisseurs entre eux ou reliant un refroidisseur avec une source froide ou chaude contrôlant la température du fluide traversant le refroidisseur. Ce circuit de fluide extérieur au bloc batteries permet d'avoir les raccords en dehors du carter du bloc batteries, et permet de limiter les risques de fuites du fluide à l'intérieur du carter.

Selon un mode de réalisation de l'invention, le carter comprend un trou pour le passage du raccord à travers le carter, et le capuchon a un périmètre interne ajusté sur le raccord et un périmètre externe, le périmètre du trou étant ajusté au périmètre externe.

En effet ces deux ajustements sont des maillons de la chaine de cotes déterminant la précision du centrage du refroidisseur dans le carter. Un premier ajustement, entre le périmètre interne du capuchon et le raccord, sera par exemple un ajustement serré pour maintenir le capuchon sur le raccord, et donc sans jeu, alors qu'un second ajustement entre le périmètre externe du capuchon et le périmètre du trou est glissant, pour permettre le passage du capuchon et donc du raccord à travers le trou.

Selon un mode de réalisation de l'invention, l'axe du trou est parallèle à l'axe du raccord.

Cette disposition permet de faciliter le montage du refroidisseur dans le carter, et d'avoir un capuchon simple de conception, avec une épaisseur de peau sensiblement constante.

Selon un mode de réalisation de l'invention, le carter comprend un module de batterie et comprend un moyen de mise en contact par pression entre le refroidisseur et le module de batterie, le moyen de mise en contact agissant selon l'axe du trou en poussant le refroidisseur contre le module.

En effet, le refroidisseur est libre de translater selon l'axe du trou, le capuchon pouvant glisser selon l'axe du trou. Ainsi le moyen de mise en contact par pression, agissant selon l'axe du trou, permet de maintenir le refroidisseur en contact contre le module de batterie sans être gêné par la présence du capuchon.

Selon un mode de réalisation de l'invention, le moyen de mise en contact est un patin élastique interposé entre le refroidisseur et le carter.

Selon un mode de réalisation de l'invention, le patin élastique est un patin en mousse fixé sur le refroidisseur.

Selon un mode de réalisation de l'invention, le capuchon est doté d'une languette de préhension dépassant à l'extérieur du carter pour faciliter son retrait par un opérateur.

Ainsi, une fois l'assemblage du bloc batteries terminé et avant ou au moment de le raccorder au circuit extérieur, le capuchon est facilement enlevé par un opérateur. Le refroidisseur reste alors correctement positionné car il est immobilisé contre les modules de batteries et le carter.

Selon un mode de réalisation de l'invention, le raccord de fluide est un raccord d'entrée et de sortie du fluide de la canalisation.

Ainsi, un seul capuchon est nécessaire pour protéger l'entrée et la sortie de fluide de la canalisation.

Selon un mode de réalisation de l'invention, le carter comprend un bac formant un fond, et un couvercle fermant le bac, le refroidisseur étant un échangeur à plaques disposé sur le fond.

Selon un mode de réalisation de l'invention, le raccord est orthogonal au plan de l'échangeur à plaques.

D'autres caractéristiques, buts et avantages de l'invention apparaîtront à la lecture de la description des exemples de réalisation non limitatifs qui vont suivre, faite en référence aux figures 1 à 3 annexées, qui représentent :
- Figure 1 : une vue en coupe locale au capuchon, d'un bloc de batteries selon l'invention,
- Figure 2 : une vue en perspective d'un refroidisseur selon l'invention, le capuchon étant en vue éclatée,
- Figure 3 : une vue en perspective et en éclaté du bloc batteries selon l'invention, sans les modules de batterie.

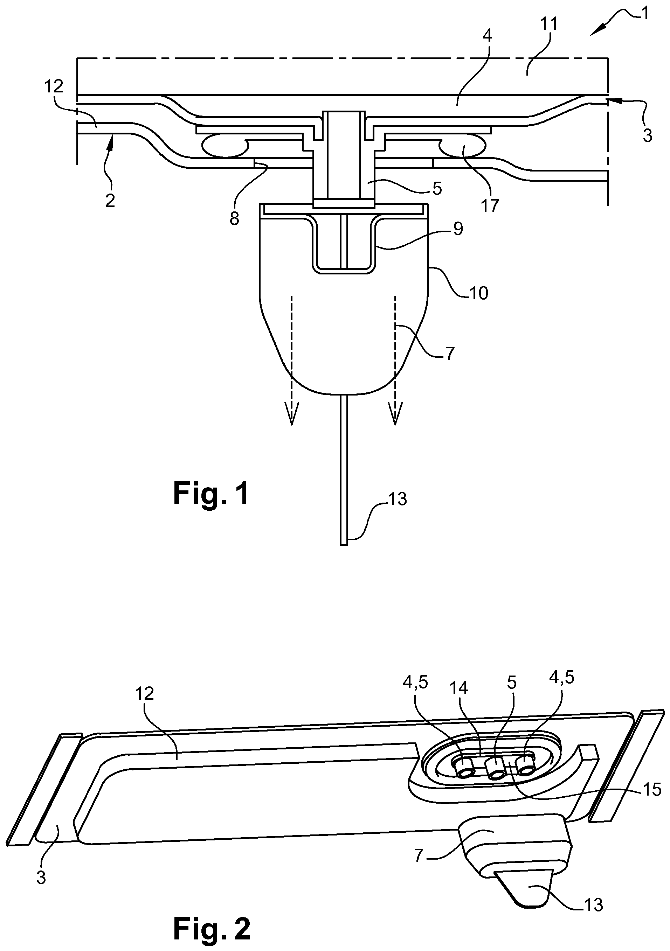

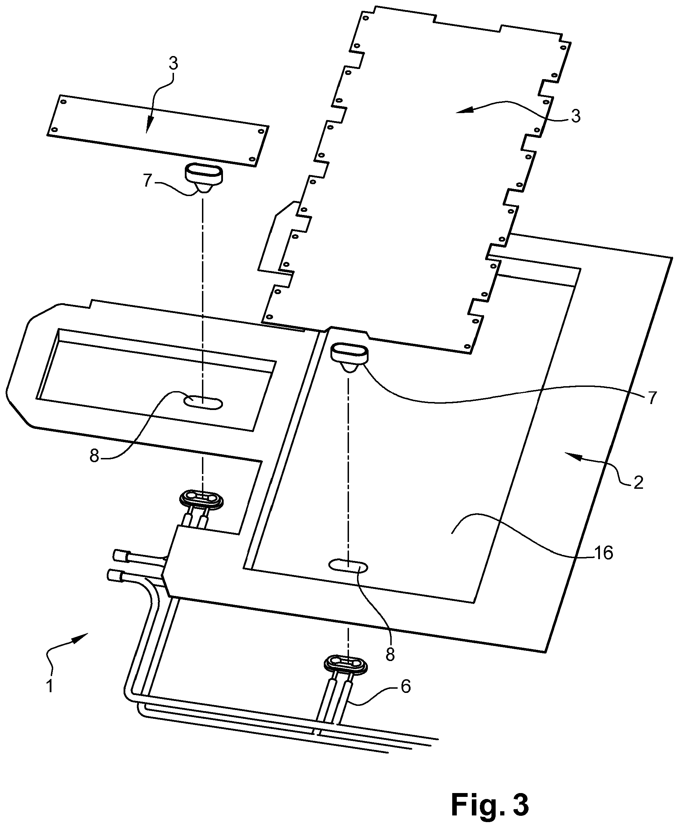

La figure 1 représente donc une coupe locale, et divulgue un bloc batteries 1 comprenant un carter 2, ce carter 2 comprenant un refroidisseur 3 de batterie, ce refroidisseur 3 comprenant une canalisation 4 de fluide caloporteur ayant au moins un raccord de fluide 5 reliant la canalisation 4 à un circuit de fluide extérieur 6 (circuit représenté uniquement sur la figure 3) au bloc batteries 1, ce raccord 5 étant coiffé par un capuchon 7 anti-intrusion amovible tel que, outre sa fonction anti-intrusion, ce capuchon 7 a une fonction de positionnement du refroidisseur 3 par rapport au carter 2.

Ce carter 2 est réalisé par exemple en tôle emboutie d'acier ou d'aluminium, et forme un volume interne hermétique, protégeant ainsi les modules 11 des intrusions externes au carter 2. La canalisation 4 a une section de forme quelconque, propre à la technologie des échangeurs comme par exemple les échangeurs à plaques ou à tubes.

Selon le mode de réalisation de l'invention représenté par la figure 1, le carter 2 comprend un trou 8 pour le passage du raccord 5 à travers le carter 2, et le capuchon 7 a un périmètre interne 9 ajusté sur le raccord 5 et un périmètre externe 10, le périmètre du trou 8 étant ajusté au périmètre externe 10. L'axe du trou 8 est parallèle à l'axe du raccord 5, et est également centré sur l'axe du raccord 5, mais d'autres configurations sont possibles, l'épaisseur du capuchon 7, qui est la différence entre le périmètre externe 10 et le périmètre interne 9, compensant les décalages géométriques entre le trou 8 et le raccord 5. Cependant, le mode illustré par la figure 1 est préféré, pour des raisons de facilité de retrait du capuchon 7 et de simplification de conception du capuchon 7.

L'ajustement entre le périmètre du trou 8 et le périmètre externe 10 laisse un jeu périphérique entre 0,5 et 2 mm.

Le carter comprend un module de batterie 11 et comprend un moyen de mise en contact 12 par pression entre le refroidisseur 3 et le module de batterie 11, le moyen de mise en contact 12 agissant selon l'axe du trou 8. Ce moyen de mise en contact 12 est un patin élastique interposé entre le refroidisseur 3 et le carter 2, par exemple une mousse fixée sur le refroidisseur 3 et comprimée par déformation de sorte a avoir l'effet d'un ressort poussant le refroidisseur 3 contre le module 11. Est également représenté un joint 17 entre le refroidisseur 3 et le carter 2, ce joint entourant le trou 8 de sorte que ce trou 8 ne puisse créer une rupture d'étanchéité du volume interne hermétique. Ce joint 17 est apte à suivre la compression du moyen de mise en contact 12, et peut avoir également une fonction de mise en contact du refroidisseur 3 contre le module 11 de par sa propre élasticité.

La figure 1 divulgue également un mode de réalisation particulier du capuchon 7, ce capuchon 7 étant doté d'une languette de préhension 13 dépassant à l'extérieur du carter 2 pour faciliter son retrait par un opérateur.

Il est à noter qu'un procédé d'assemblage pour ce bloc batterie 1 dans un véhicule, par exemple un véhicule électrique ou hybride, comprend des étapes de :
- réception du refroidisseur 3 avec son capuchon 7 coiffant le raccord 5,
- positionnement du refroidisseur 3 dans le carter 2, le capuchon 7 centrant le refroidisseur par rapport au trou 8 du carter 2,
- montage du module de batterie 11 et mise en pression du moyen de mise en contact 12 par écrasement de ce dernier sous l'effet de la présence du module de batterie 11,
- fermeture du carter 2,
- positionnement du bloc batteries 1 dans le véhicule,
- retrait du capuchon 7 par un opérateur, en le tirant pas la languette 13,
- mise en place du circuit de fluide extérieur 6,
- raccordement de la canalisation 4 au circuit de fluide extérieur 6.

Bien entendu, le capuchon 7 peut être recyclé et réutilisé en l'état pour d'autres refroidisseurs 3 à monter.

La figure 2 illustre un refroidisseur 3 d'un bloc batteries selon l'invention, et montre un mode de réalisation où le capuchon 7 coiffe le raccord de fluide 5 qui est un raccord d'entrée et de sortie du fluide de la canalisation 4. Les deux extrémités de la canalisation 4, c'est-à-dire l'extrémité d'entrée où le fluide rentre dans la canalisation 4 et l'extrémité de sortie d'où s'échappe le fluide de la canalisation 4 sont suffisamment proches pour que le capuchon 7 coiffe ces deux extrémités en même temps. Mais en variante, chaque extrémité peut avoir son propre raccord 5 avec autant de capuchons 7 que de raccords 5. Il est alors possible que, pour des raisons d'iso-statisme, tous les capuchons 7 n'aient pas la fonction de positionnement du refroidisseur : un seul capuchon 7 peut être privilégié.

Le raccord 5 peut être simplement l'une des extrémités de la canalisation 4, cette extrémité étant dotée d'un moyen de raccord rapide avec le circuit extérieur 6, le périmètre interne 9 venant s'ajuster (et se centrer) sur cette extrémité, comme l'illustre la figure 1. Mais ce raccord 5 peut être les deux extrémités, le capuchon 7 venant se centrer sur l'une ou les deux extrémités. La figure 2 illustre encore une autre variante, où le raccord 5 comprend les deux extrémités et une platine 15 réunissant les deux extrémités et formant un épaulement 14 entourant les deux extrémités, dans cet exemple de forme ovale, épaulement 14 sur lequel vient s'ajuster et se centrer le capuchon 7.

Comme précédemment explicité, l'ajustement du périmètre interne 9 sur le raccord 5, c'est-à-dire selon les variantes ci-dessus autour de l'une des extrémités ou les deux, ou autour de l'épaulement 14, ou toute autre possibilité, est un ajustement serré, pour pouvoir maintenir en place le capuchon 7.

Cette même figure 2 illustre le refroidisseur 3 sous la forme d'un échangeur à plaques, qui est un mode de réalisation préféré de l'invention, mais on pourrait envisager un échangeur d'un autre type, selon la forme du module de batterie 11. Le moyen de mise en contact 12 par pression entre le refroidisseur 3 et le module de batterie 11 est ici un patin élastique très large prenant la forme d'un tapis souple type mousse, et collé sur le refroidisseur.

La figure 3 illustre le carter 2 comprenant un bac formant un fond 16, et un couvercle fermant le bac (non représenté), le refroidisseur 3 étant l'échangeur à plaques précédemment décrit et disposé sur le fond 16, le capuchon 7 traversant le trou 8 lui-même réalisé dans le fond 16. Dans cette configuration, le moyen de mise en contact 12 est mis en pression par le poids du module de batterie 11 qui est positionné au-dessus du refroidisseur 3. Cette mise en pression est contrôlée par des butées (non représentées) du fond 16 qui contrôlent la proximité entre le module 11 et le carter 2. Ainsi le refroidisseur 3 est prisonnier entre le module 11 et le moyen de mise en contact 12 et est plaqué contre le module 11, tout en étant correctement positionné. Ce plaquage assure la conductivité thermique entre le refroidisseur 3 et le module 11. La figure 3 illustre également l'orthogonalité du raccord 5 avec le plan de l'échangeur à plaque 3, ce qui revient à expliciter que, le fond 16 étant sensiblement orienté à l'horizontal lors du procédé d'assemblage, l'axe de montage des éléments du bloc batteries 1, notamment le refroidisseur 3 et le module 11, est sensiblement vertical.

On notera également que la figure 3 illustre une partie du circuit de fluide extérieur 6, qui relie fluidiquement plusieurs refroidisseurs 3 à une source chaude ou froide de fluide caloporteur (non représentée). Ce circuit de fluide extérieur 6 se trouve donc sous le fond 16, et comprend notamment une pompe de circulation du fluide caloporteur forçant le passage du fluide dans l'échangeur à plaques 3.

Grâce à cette invention, le refroidisseur 3 est parfaitement positionné dans le bloc batteries 1, en minimisant l'encombrement du bloc batteries 1 , et tout en assurant un échange thermique optimal entre le refroidisseur 3 et le module 11.

## Revendications

1. Bloc batteries (1) comprenant un carter (2), ce carter comprenant un refroidisseur (3) de batterie, ce refroidisseur (3) comprenant une canalisation (4) de fluide caloporteur ayant au moins un raccord de fluide (5) reliant la canalisation (4) à un circuit de fluide extérieur (6) au bloc batteries, ce raccord (5) étant coiffé par un capuchon (7) anti-intrusion amovible, **caractérisé en ce que**, outre sa fonction anti-intrusion, ce capuchon (7) a une fonction de positionnement du refroidisseur (3) par rapport au carter (2).

2. Bloc batteries selon la revendication 1, le carter (2) comprenant un trou (8) pour le passage du raccord (5) à travers le carter (2), et le capuchon (7) ayant un périmètre interne (9) ajusté sur le raccord (5) et un périmètre externe (10), **caractérisé en ce que** le périmètre du trou (8) est ajusté au périmètre externe (10).

3. Bloc batteries selon la revendication 2, **caractérisé en ce que** l'axe du trou (8) est parallèle à l'axe du raccord (5).

4. Bloc batterie selon la revendication 3, le carter (2) comprenant un module de batterie (11) et comprenant un moyen de mise en contact (12) par pression entre le refroidisseur (3) et le module de batterie (11), **caractérisé en ce que** le moyen de mise en contact (12) agit selon l'axe du trou (8) en poussant le refroidisseur (3) contre le module (11).

5. Bloc batterie selon la revendication 4, **caractérisé en ce que** le moyen de mise en contact (12) est un patin élastique interposé entre le refroidisseur (3) et le carter (2).

6. Bloc batterie selon la revendication 5, **caractérisé en ce que** le patin élastique est un patin en mousse fixé sur le refroidisseur (3).

7. Bloc batteries selon l'une des revendications précédentes, **caractérisé en ce que** le capuchon (7) est doté d'une languette (13) de préhension dépassant à l'extérieur du carter (2) pour faciliter son retrait par un opérateur.

8. Bloc batteries selon l'une des revendications précédentes, **caractérisé en ce que** le raccord de fluide (5) est un raccord d'entrée et de sortie du fluide de la canalisation (4).

9. Bloc batteries selon l'une des revendications précédentes, le carter (2) comprenant un bac formant un fond (16), et un couvercle fermant le bac, **caractérisé en ce que** le refroidisseur (3) est un échangeur à plaques disposé sur le fond (16).

10. Bloc batteries selon la revendication 9, **caractérisé en ce que** le raccord (5) est orthogonal au plan de l'échangeur à plaques (3).

## Patentansprüche

1. Batteriepack (1) umfassend ein Gehäuse (2), wobei dieses Gehäuse einen Batteriekühler (3) umfasst, wobei dieser Kühler (3) ein Wärmeträgerfluidrohr (4) mit mindestens einem das Rohr (4) verbindenden Fluidanschluss (5) umfasst) an einen Flüssigkeitskreislauf (6) außerhalb des Batteriepacks, wobei dieser Anschluss (5) von einer abnehmbaren Schutzkappe (7) abgedeckt ist, **dadurch gekennzeichnet, dass** diese Schutzkappe (7) zusätzlich zu ihrer Schutzfunktion hat die Funktion, den Kühler (3) relativ zum Gehäuse (2) zu positionieren.

2. Batteriepack nach Anspruch 1, wobei das Gehäuse (2) ein Loch (8) zum Hindurchführen des Verbinders (5) durch das Gehäuse (2) umfasst und die Kappe (7) einen Innenumfang (9) aufweist, der daran angepasst ist Verbinder (5) und einen äußeren Umfang (10), **dadurch gekennzeichnet, dass** der Umfang des Lochs (8) an den äußeren Umfang (10) angepasst ist.

3. Batteriepack nach Anspruch 2, **dadurch gekennzeichnet, dass** die Achse des Lochs (8) parallel zur Achse des Verbinders (5) ist.

4. Batteriepaket nach Anspruch 3, wobei das Gehäuse (2) ein Batteriemodul (11) und Mittel zum Kontaktieren (12) durch Druck zwischen dem Kühler (3) und dem Batteriemodul (11) umfasst, **dadurch gekennzeichnet, dass** die Kontaktmittel (12) wirkt entlang der Achse des Lochs (8), indem er den Kühler (3) gegen das Modul (11) drückt.

5. Batteriepack nach Anspruch 4, **dadurch gekennzeichnet, dass** das Kontaktmittel (12) ein elastisches Kissen ist, das zwischen dem Kühler (3) und dem Gehäuse (2) angeordnet ist.

6. Batteriepack nach Anspruch 5, **dadurch gekennzeichnet, dass** der elastische Schuh ein am Kühler (3) befestigter Schaumstoffschuh ist.

7. Batteriepack nach einem der vorhergehenden Ansprüche, **dadurch gekennzeichnet, dass** die Kappe (7) mit einer außerhalb des Gehäuses (2) vorstehenden Grifflasche (13) versehen ist, um ihr Entfernen durch eine Bedienperson zu erleichtern.

8. Batteriepack nach einem der vorhergehenden Ansprüche, **dadurch gekennzeichnet, dass** der Fluidanschluss (5) ein Fluideinlass und -auslassanschluss für das Rohr (4) ist.

9. Batteriepack nach einem der vorhergehenden Ansprüche, wobei das Gehäuse (2) einen einen Boden (16) bildenden Tank und einen den Tank verschließenden Deckel umfasst, **dadurch gekennzeichnet, dass** der Kühler (3) ein auf dem Boden (16).

10. Batteriepack nach Anspruch 9, **dadurch gekennzeichnet, dass** die Verbindung (5) orthogonal zur Ebene des Plattentauschers (3) ist.

## Claims

1. Battery pack (1) comprising a casing (2), this casing comprising a battery cooler (3), this cooler (3) comprising a heat transfer fluid pipe (4) having at least one fluid connection (5) connecting the pipe (4) to a fluid circuit (6) external to the battery pack, this connector (5) being covered by a removable anti-intrusion cap (7), **characterized in that**, in addition to its anti-intrusion function, this cap (7) has a function of positioning the cooler (3) relative to the housing (2).

2. Battery pack according to claim 1, the casing (2) comprising a hole (8) for the passage of the connection (5) through the casing (2), and the cap (7) having an internal perimeter (9) fitted to the connector (5) and an outer perimeter (10), **characterized in that** the perimeter of the hole (8) is fitted to the outer perimeter (10).

3. Battery pack according to claim 2, **characterized in that** the axis of the hole (8) is parallel to the axis of the connector (5).

4. Battery pack according to claim 3, the casing (2) comprising a battery module (11) and comprising means for contacting (12) by pressure between the cooler (3) and the battery module (11), **characterized in that** the contacting means (12) acts along the axis of the hole (8) by pushing the cooler (3) against the module (11).

5. Battery pack according to claim 4, **characterized in that** the contacting means (12) is an elastic pad interposed between the cooler (3) and the casing (2).

6. Battery pack according to claim 5, **characterized in that** the elastic shoe is a foam shoe fixed to the cooler (3).

7. Battery pack according to one of the preceding claims, **characterized in that** the cap (7) is provided with a gripping tab (13) projecting outside the casing (2) to facilitate its removal by an operator.

8. Battery pack according to one of the preceding claims, **characterized in that** the fluid connector (5) is a fluid inlet and outlet connector for the pipe (4).

9. Battery pack according to one of the preceding claims, the casing (2) comprising a tank forming a bottom (16), and a lid closing the tank, **characterized in that** the cooler (3) is a plate heat exchanger placed on the bottom (16).

10. Battery pack according to claim 9, **characterized in that** the connection (5) is orthogonal to the plane of the plate exchanger (3).
